# EUROPÄISCHE PATENTANMELDUNG

(11) **EP 3 543 067 A1**
(43) Veröffentlichungstag der Anmeldung: **25.09.2019**
(21) Anmeldenummer: 19163990.5
(22) Anmeldetag: 20.03.2019
(51) Int. Cl.: B60N 2/68, B60N 2/58

(54) **TRAGKONSTRUKTION FÜR EINE SITZLEHNE, SITZ UND VERFAHREN ZUR HERSTELLUNG EINES SITZES**

(30) Priorität: 20.03.2018 DE 102018204276
(71) Anmelder: Adient Engineering and IP GmbH, 51399 Burscheid (DE)
(72) Erfinder: Pluta, Wolfgang, 67699 Heiligenmoschel (DE); Christoffel, Thomas, 66909 Herschweiler-Pettersheim (DE); Krisch, Christina, 67659 Kaiserslautern (DE)
(74) Vertreter: Liedtke & Partner Patentanwälte

(57) **Zusammenfassung**

Die Erfindung betrifft eine Tragkonstruktion (1) für eine Sitz- oder Rückenlehne (RL) eines Sitzes (S), umfassend
- einen Rahmen (2) mit zumindest zwei vertikalen Rahmenelementen (2.1) und mindestens einem Querträger (2.2) und
- ein Befestigungsblech (3), welches
mindestens eine Verbindungsprägung (3.1) zur festen Verbindung des Rahmens (2) mit dem Befestigungsblech (3) und zumindest eine Abheftungsprägung (3.2) zur Befestigung eines Bezugselements (BZ) am Befestigungsblech (3) aufweist,
- wobei die mindestens eine Verbindungsprägung (3.1) und die zumindest eine Abheftungsprägung (3.2) bereichsweise überlappen.

Die Erfindung betrifft weiterhin einen Sitz (S) mit einer solchen Tragkonstruktion (1) sowie ein Verfahren zur Herstellung eines solchen Sitzes (S).

## Beschreibung

Die Erfindung betrifft eine Tragkonstruktion für eine Sitzlehne eines Fahrzeugsitzes. Die Erfindung betrifft weiterhin einen Sitz mit einer solchen Tragkonstruktion sowie ein Verfahren zur Herstellung des Sitzes.

Aus dem Stand der Technik ist aus DE 10 2013 218 096 B4 eine derartige Tragkonstruktion bekannt. Derartige Tragkonstruktionen werden üblicherweise mit einem Bezugselement versehen, das in Nuten eines Rückenblechs fixiert wird, wie dies beispielsweise aus EP 2 867 062 B1 bekannt ist.

Der Erfindung liegt die Aufgabe zu Grunde, eine verbesserte Tragkonstruktion mit einer verbesserten Bezugshalterung anzugeben. Der Erfindung liegt weiterhin die Aufgabe zu Grunde, einen verbesserten Sitz sowie ein geeignetes Verfahren zur Herstellung eines solchen Sitzes anzugeben.

Hinsichtlich der Tragkonstruktion wird die Aufgabe erfindungsgemäß mit den in Anspruch 1 angegebenen Merkmalen gelöst. Hinsichtlich des Sitzes wird die Aufgabe erfindungsgemäß mit den in Anspruch 13 angegebenen Merkmalen gelöst. Hinsichtlich des Verfahrens wird die Aufgabe erfindungsgemäß mit den in Anspruch 15 angegebenen Merkmalen gelöst.

Eine erfindungsgemäße Tragkonstruktion für eine Sitz- oder Rückenlehne eines Sitzes umfasst einen Rahmen, z. B. einen Lehnenrahmen, mit zumindest zwei vertikalen Rahmenelementen und mindestens einem Querträger. Die Tragkonstruktion umfasst weiterhin ein Befestigungsblech, z. B. ein Rückenblech, welches mindestens eine Verbindungsprägung zur festen Verbindung des Rahmens mit dem Befestigungsblech und zumindest eine Abheftungsprägung zur Befestigung eines Bezugselements am Befestigungsblech aufweist, wobei die mindestens eine Verbindungsprägung und die zumindest eine Abheftungsprägung bereichsweise überlappen.

Aufgrund der bereichsweisen Überlappung von Abheftungsprägung und Verbindungsprägung ist eine planare Fläche des Befestigungsbleches vergrößert. Die planare Fläche ist insbesondere zur Anordnung eines Bezugselements, wie zum Beispiel eines Teppichs, eines Gewebes oder eines Naturmaterials, wie Leder, vorgesehen.

Gemäß einem Ausführungsbeispiel ist die zumindest eine Abheftungsprägung als eine längs verlaufende Vertiefung in das Befestigungsblech eingebracht. Insbesondere ist die Abheftungsprägung in Form einer länglichen Sicke oder Nut in das Befestigungsblech eingebracht, insbesondere eingeformt, wie eingedrückt. In der Abheftungsprägung kann ein Bezugselement angeordnet und befestigt werden.

Die mindestens eine Verbindungsprägung kann als eine punktuelle oder stufenförmige Vertiefung in das Befestigungsblech eingebracht sein und befindet sich zur Vergrößerung der planaren Fläche des Befestigungsblechs bereichsweise in der Abheftungsprägung. Die Verbindungsprägung kann weiterhin auch als Sicke oder Nut in das Befestigungsblech eingebracht, insbesondere eingeformt, wie eingedrückt sein.

Gemäß einem weiteren Ausführungsbeispiel weist das Befestigungsblech mehrere Verbindungsprägungen auf, wobei die zumindest eine Abheftungsprägung mit einer der Verbindungsprägungen bereichsweise überlappt. Dadurch, dass eine der Verbindungsprägungen und die Abheftungsprägung bereichsweise überlappen, ist ein Prägungsbereich der Tragkonstruktion signifikant verkleinert.

Des Weiteren kann der Rahmen zumindest zwei im Wesentlichen vertikale Rahmenelemente und mindestens einen damit verbundenen Querträger umfassen. Die Rahmenelemente und/oder der Querträger weisen beispielsweise jeweils ein Hohlprofil, insbesondere ein Rundprofilelement und/oder ein Vierkantprofil auf. Beispielsweise sind die vertikalen Rahmenelemente aus Rundprofilelementen, insbesondere Rohren gebildet. Der Querträger kann aus einem Vierkantprofil gebildet sein. Des Weiteren können die Rahmenelemente und Querträger auch aus gleichartigen Profilelementen, z. B. Vierkantprofilen gebildet sein.

Gemäß einem weiteren Ausführungsbeispiel sind die Rahmenelemente jeweils endseitig mit dem Querträger mittels einer Steckverbindung formschlüssig oder form- und kraftschlüssig miteinander verbunden. Insbesondere sind die Rahmenelemente und der Querträger in Eckbereichen ineinander gesteckt. Dabei können zusätzliche Befestigungsmittel, z. B. Schrauben, für eine kraftschlüssige Verbindung der Rahmenelemente mit dem Querträger vorgesehen sein.

Gemäß einem Ausführungsbeispiel ist ein Überlappungsbereich der zumindest einen Abheftungsprägung und der mindestens einen Verbindungsprägung im Bereich des Querträgers angeordnet. Dadurch kann die Tragkonstruktion besonders stabil ausgeführt werden.

Ferner kann am Querträger mindestens ein Bauteil zur Aufnahme einer Kopfstütze des Sitzes angeordnet sein. Insbesondere weist das Bauteil ein Hohlprofil zur Aufnahme von Kopfstützenhalterungen auf. Dies ermöglicht die Einstellung einer optimalen Kopfstützenposition.

Gemäß einem weiteren Ausführungsbeispiel umfasst die Tragkonstruktion eine verprägungsfreie Stützfläche, auf welcher das Bezugselement angeordnet oder anordenbar ist. Die Stützfläche ist aufgrund der bereichsweise überlappend angeordneten Verbindungsprägung und Abheftungsprägung gegenüber dem Stand der Technik vergrößert. Dadurch ist eine verbesserte Anordnung des Bezugselements, insbesondere eines Sitzbezuges, möglich.

Das Bezugselement ist beispielsweise ein Teppich, ein Gewebe und/oder ein Naturmaterial, wie z. B. Leder. Insbesondere umfasst das Bezugselement zwei Bezugsteile, die miteinander vernäht sind.

Gemäß einem weiteren Ausführungsbeispiel ist das Bezugselement im Bereich der Abheftungsprägung mit dem Befestigungsblech vernäht. Dazu werden beispielsweise Bezugs-Randkanten in der Abheftungsprägung angeordnet und dort mit dem Befestigungsblech vernäht. Dies ermöglicht eine optisch ansprechende Abheftung des Bezugselements. Zudem ist die Abheftung des Bezugselements mit einer derartigen Vernähung insgesamt stabil und beständig ausgebildet.

Es ist weiterhin ein Sitz vorgesehen, welcher die erfindungsgemäße Tragkonstruktion umfasst. Die Tragkonstruktion kann dabei Teil ein Sitzteils, einer relativ zum Sitzteil verstellbaren Sitz- oder Rückenlehne und/oder einer Kopfstütze sein. Der Sitz weist mittels der Tragkonstruktion eine gegenüber dem Stand der Technik verbesserte Bezugshalterung auf.

Ferner ist ein Verfahren zur Herstellung eines Sitzes vorgesehen, bei dem - die mindestens eine Verbindungsprägung und die zumindest eine Abheftungsprägung bereichsweise überlappend in das Befestigungsblech eingebracht werden, wobei das Befestigungsblech am Rahmen befestigt wird, wobei zur Befestigung des Befestigungsblechs am Rahmen mindestens ein Spannelement am Befestigungsblech positioniert wird, mittels welchem der Rahmen und das Befestigungsblech wenigstens abschnittsweise gespannt werden, wobei zumindest in einem Überlappungsbereich von Verbindungsprägung und Abheftungsprägung ein Schweißwerkzeug eingreifend angeordnet wird, mittels welchem das wenigstens abschnittsweise gespannte Befestigungsblech an den Rahmen angeschweißt wird und wobei das Bezugselement auf einer verprägungsfreien Stützfläche des Befestigungsblechs angeordnet und in der mindestens einen Abheftungsprägung befestigt wird.

Durch die überlappenden Bereiche von Verbindungsprägung und Abheftungsprägung kann ein lokaler Bereich neben einer Schweißstelle steif genug ausgeführt werden, um das mindestens eine Spannelemente dort anzuordnen und damit den Prägebereich der Tragkonstruktion signifikant zu verkleinern. Des Weiteren kann die Verbindungsprägung beispielsweise derart groß in das Befestigungs- oder Rückenblech eingeformt sein, dass ober- und unterhalb des Schweißwerkzeugs jeweils ein Spannelement anordenbar ist.

Ausführungsbeispiele der Erfindung werden anhand von Zeichnungen näher erläutert. Dabei zeigen:
- Figur 1: schematisch eine Seitenansicht eines Sitzes mit einer Sitzlehne,
- Figur 2: schematisch in perspektivischer Darstellung eine Tragkonstruktion für eine Sitzlehne in Draufsicht auf ein Befestigungsblech,
- Figur 3: schematisch in perspektivischer Darstellung eine Tragkonstruktion für eine Sitzlehne in Draufsicht auf einen Rahmen,
- Figur 4: schematisch in perspektivischer Darstellung eine Tragkonstruktion für eine Sitzlehne,
- Figur 5: schematisch eine vergrößerte Schnittdarstellung im Bereich einer Abheftungsprägung der Tragkonstruktion,
- Figur 6: schematisch in perspektivischer Darstellung einen vergrößerten Ausschnitt im Bereich einer Verbindungsprägung mit Abstandshalter,
- Figuren 7 und 8: schematisch verschiedene vergrößerte Schnittdarstellungen im Bereich einer Abheftungsprägung und einer Verbindungsprägung der Tragkonstruktion und

Figuren 9A und 9B schematisch Schnittdarstellungen eines Einhängeprofils.

Einander entsprechende Teile sind in allen Figuren mit den gleichen Bezugszeichen versehen.

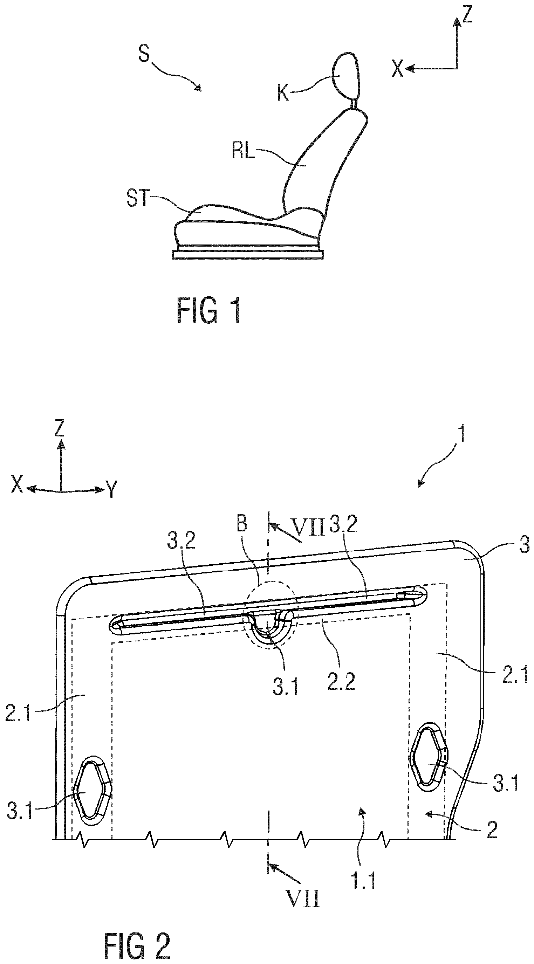

**Figur 1** zeigt schematisch eine Seitenansicht eines Sitzes S, welcher nachfolgend in einem kartesischen Koordinatensystem mit drei senkrecht aufeinander stehenden Raumrichtungen X, Y, Z beschrieben ist.

Der Sitz S ist beispielsweise ein Fahrzeugsitz, insbesondere ein Fondsitz einer zweiten Sitzreihe, und umfasst ein Sitzteil ST, eine relativ zum Sitzteil ST in ihrer Neigung einstellbare Sitz- oder Rückenlehne RL und eine Kopfstütze K.

**Figur 2** zeigt schematisch in perspektivischer Darstellung eine Vorderansicht einer Tragkonstruktion 1 für die in **Figur 1** gezeigte Sitz- oder Rückenlehne RL des Sitzes S.

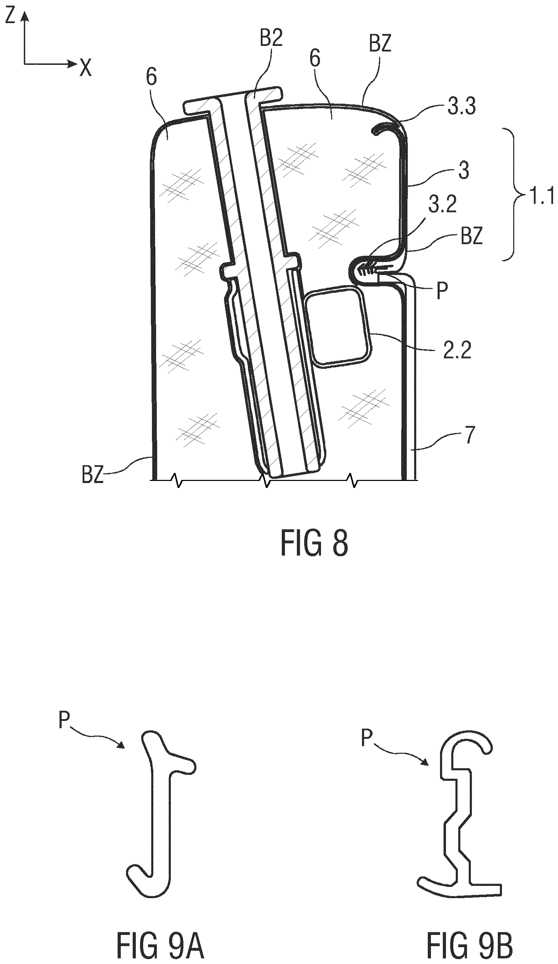

Die Tragkonstruktion 1 weist eine möglichst großflächige planare oder ebene, insbesondere verprägungsfreie Stützfläche 1.1 für ein auf diesem anzuordnendes Bezugselement BZ (siehe **Figur 9**), wie zum Beispiel einen Teppich, ein Gewebe oder ein Naturmaterial, wie Leder, auf.

Die Tragkonstruktion 1 umfasst weiterhin einen Rahmen 2 und ein Befestigungsblech 3, die miteinander fest verbunden, insbesondere miteinander verschweißt sind. Im vorliegenden Ausführungsbeispiel ist der Rahmen 2 insbesondere ein Lehnenrahmen und das Befestigungsblech 3 ein Rückenblech.

Der Rahmen 2 umfasst zumindest zwei im Wesentlichen vertikale Rahmenelemente 2.1 und mindestens einen oberseitig damit verbundenen Querträger 2.2. Der Rahmen 2 ist im Wesentlichen aus Hohlprofilen, insbesondere Rundprofilelementen und/oder Vierkantprofilelementen gebildet. Beispielsweise sind die vertikalen Rahmenelemente 2.1 aus Rundprofilelementen, insbesondere Rohren gebildet. Der Querträger 2.2 ist insbesondere aus einem Vierkantprofil gebildet. Auch können Rahmenelemente 2.1 und Querträger 2.2 aus gleichartigen Profilelementen, insbesondere Vierkantprofilen gebildet sein.

Zum Verbinden des Rahmens 2 mit dem Befestigungsblech 3 umfasst das Befestigungsblech 3 Verbindungsprägungen 3.1, welche insbesondere als punktuelle Vertiefungen oder stufenförmige Ausnehmungen ausgebildet sind.

Alternativ können die Verbindungsprägungen 3.1 auch als Sicke und/oder Nut in das Befestigungsblech 3 eingebracht sein. Das Einbringen der Verbindungsprägungen 3.1 kann insbesondere durch Einformen, wie z. B. Eindrücken, erfolgen. Im vorliegenden Ausführungsbeispiel sind drei Verbindungsprägungen 3.1 gezeigt.

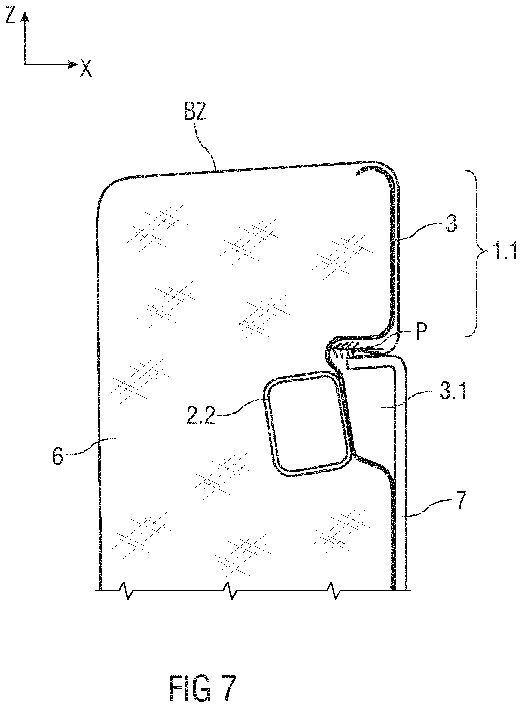

Darüber hinaus umfasst das Befestigungsblech 3 zum Befestigen, insbesondere zur Abheftung eines Bezugselements BZ (gezeigt in den **Figuren 7****,** **8**) am Befestigungsblech 3 zumindest eine Abheftungsprägung 3.2. Die Abheftungsprägung 3.2 ist beispielsweise in Form einer länglichen Sicke oder Nut in das Befestigungsblech 3 eingebracht, insbesondere eingeformt, wie z. B. eingedrückt. Im gezeigten Ausführungsbeispiel ist eine Rückseite der Abheftungsprägung 3.2 gezeigt, so dass diese aus der Bildebene herausragt.

Das Bezugselement BZ ist beispielsweise ein Sitzbezug aus zwei Bezugsteilen, die miteinander unter Bildung einer Nahtfahne miteinander vernäht sind. Das Bezugselement BZ weist weiterhin Bezugs-Randkanten auf, die beispielsweise gesäumt sind und mit denen das Bezugselement BZ in der Abheftungsprägung 3.2 eingeführt wird. Eine Befestigung des Bezugselements BZ in der Abheftungsprägung 3.2 erfolgt beispielsweise, indem die Bezugsrandkanten in der Abheftungsprägung 3.2 mit dem Befestigungsblech 3 vernäht werden. Beispielsweise kann das Befestigungsblech 3 dazu in der Abheftungsprägung 3.2 ein zum Vernähen geeignetes Profil, z. B. eine Profilleiste, aufweisen. Insbesondere kann die Abheftungsprägung 3.2 ein in den **Figuren 7 bis 9B** beispielhaft gezeigtes Einhängeprofil P aufweisen, an dem das Bezugselement BZ form-, kraft- und/oder stoffschlüssig befestigbar ist.

Weiterhin ist vorgesehen, dass die zumindest eine Abheftungsprägung 3.2 mit zumindest einer der Verbindungsprägungen 3.1 bereichsweise überlappt.

Durch die insbesondere bereichsweise Überlappung von Abheftungsprägung 3.2 und Verbindungsprägung 3.1 in einem Überlappungsbereich B ist die planare oder ebene, insbesondere verprägungsfreie, Stützfläche 1.1 des Befestigungsbleches 3 vergrößert.

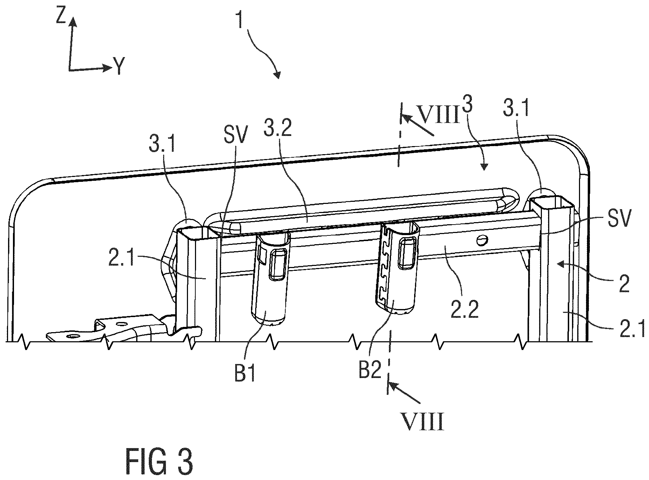

**Figur 3** zeigt schematisch in perspektivischer Darstellung die Tragkonstruktion 1 in Draufsicht auf den Rahmen 2. Dabei ist der Überlappungsbereich B von Abheftungsprägung 3.2 und Verbindungsprägung 3.1 im Bereich des Querträgers 2.2 vorgesehen und wird überdeckt. Wie gezeigt, ist der Rahmen 2 aus Vierkantprofilen gebildet, die in Eckbereichen ineinander gesteckt und somit mittels einer Steckverbindung SV mindestens formschlüssig miteinander verbunden sind. Alternativ können auch nicht gezeigte zusätzliche Befestigungselemente, z. B. Schrauben, vorgesehen sein.

Am Querträger 2.2 sind weiterhin Bauteile B1, B2 angeordnet, welche Aufnahmen für nicht gezeigte Kopfstützenhalterungen bilden. Die Bauteile B1, B2 weisen insbesondere Hohlprofile auf. Das Bauteil B2 ist beispielhaft in **Figur 8** gezeigt.

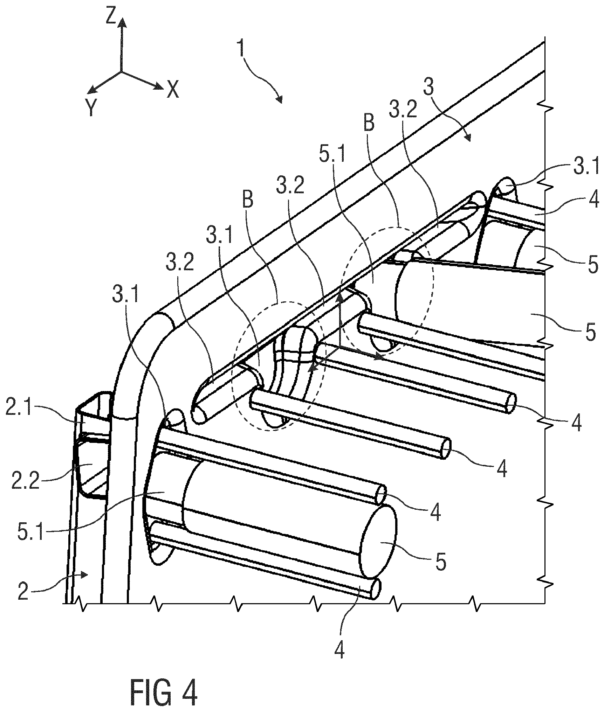

**Figur 4** zeigt schematisch in perspektivischer Darstellung die Tragkonstruktion 1 während eines Verbindungsprozesses mit in dieser angeordneten Spannelementen 4 und einem im Bereich einiger Verbindungsprägungen 3.1 eingreifenden Schweißwerkzeuges 5 mit Schweißpins 5.1 zur Abstandshaltung.

Beim Verbinden, insbesondere Anschweißen, des Befestigungsbleches 3 an den Rahmen 2 werden üblicherweise Spannelemente 4, wie Stifte oder Pins, zum Zusammendrücken von Befestigungsblech 3 und Rahmen 2 verwendet. Hierdurch wird ein Abstand zwischen zu verschweißenden Flächen von Befestigungsblech 3 und Rahmen 2 im Bereich der Verbindungsprägungen 3.1 eingestellt und eingehalten, so dass diese mittels des Schweißwerkzeuges 5 miteinander verschweißt werden können.

Durch die überlappenden Bereiche von Verbindungsprägung 3.1 und Abheftungsprägung 3.2 ist der lokale Bereich neben der eigentlichen Befestigungs-, insbesondere Schweißstelle steif genug, um das oder die Spannelemente 4 dort anzuordnen und damit einen zur Befestigung benötigten Prägebereich signifikant zu verkleinern. Beispielsweise ist die Verbindungsprägung 3.1 derart groß in das Befestigungsblech 3 eingeformt, dass ober- und unterhalb des Schweißpins 5.1 jeweils ein Spannelement 4 angeordnet werden kann.

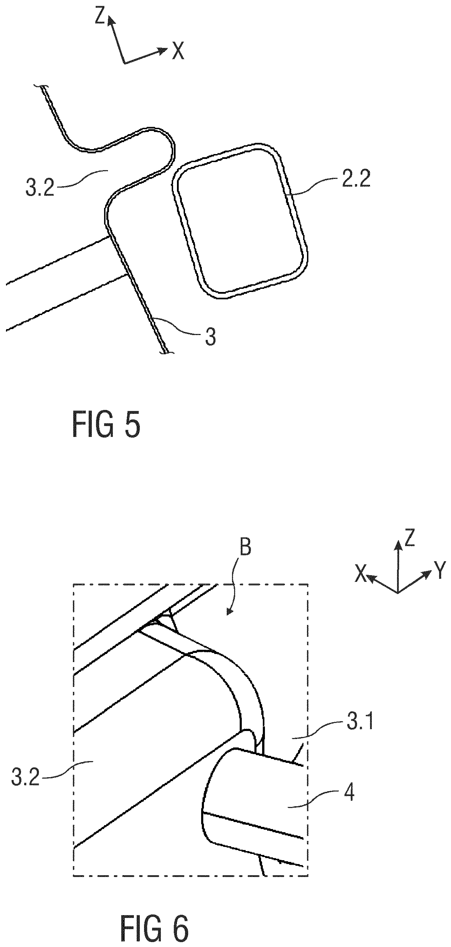

**Figur 5** zeigt schematisch eine vergrößerte Schnittdarstellung im Bereich der Abheftungsprägung 3.2 und mit dem unterhalb dieser angeordneten Querträger 2.2.

**Figur 6** zeigt schematisch in perspektivischer Darstellung einen vergrößerten Ausschnitt in einem Überlappungsbereich B einer Verbindungsprägung 3.1 und einer Abheftungsprägung 3.2 und mit einem in diesem Überlappungsbereich B angeordneten Spannelement 4 als Abstandshalter.

**Figur 7** zeigt schematisch eine vergrößerte Schnittdarstellung im Bereich einer Verbindungsprägung 3.1 zur Befestigung des Rahmens 2, insbesondere des Querträgers 2.2, an das Befestigungsblech 3.

**Figur 8** zeigt schematisch eine vergrößerte Schnittdarstellung im Bereich einer Abheftungsprägung 3.2 zur Befestigung des Bezugselements BZ an dem Befestigungsblech 3 bereichsweise in dessen Abheftungsprägung 3.2. Unterhalb der Abheftungsprägung 3.2 verläuft der Rahmen 2, insbesondere der Querträger 2.2. Das Befestigungsblech 3 weist einen bereichsweise umlaufenden und leicht gebogenen oder abgewinkelten Blechrand 3.3 auf, an den sich eine weitgehend ebene Fläche anschließt, die die Stützfläche 1.1 bildet.

Das Befestigungsblech 3 und der Rahmen 2 sind an bzw. in einem Polster 6 angeordnet, wie dies in beiden **Figuren 7** **und** **8** dargestellt ist. Dabei ragt die Abheftungsprägung 3.2 in eine Vertiefung des Polsters 6 hinein. Der Rahmen 2, insbesondere der Querträger 2.2, kann, wie in **Figur 8** dargestellt, bereichsweise weitgehend vollständig vom Polster 6 umgeben sein. In **Figur 7** ist ein Teilbereich des Querträgers 2.2 in einem der vertikalen Rahmenelemente 2.1 angeordnet.

Das Polster 6 ist zumindest bereichsweise mit dem Bezugselement BZ überzogen, das wiederum mittels des Einhängeprofils P in der Abheftungsprägung 3.2 befestigt und gehalten ist. Dabei kann das Bezugselement BZ im Bereich einer weitgehend ebenen Stützfläche 1.1 der Tragkonstruktion 1, insbesondere einem ebenen Bereich des Befestigungsbleches 3 plan auf diesem angeordnet sein und aufliegen.

Zur Befestigung des Bezugselements BZ am Befestigungsblech 3 ist das Einhängeprofil P an einem freien Ende des Bezugselements BZ befestigt und derart ausgebildet, dass es form- oder kraftschlüssig am Befestigungsblech 3, insbesondere in dessen Abheftungsprägung 3.2, eingreift und dort fixiert ist, zum Beispiel geklipst, gesteckt oder einrastend gehalten ist.

Das Befestigungsblech 3 kann darüber hinaus bereichsweise mit einer Kaschierung 7, beispielsweise eine Blende oder ein Teppich, versehen sein.

**Die** **Figuren 9A und 9B** zeigen schematisch Schnittdarstellungen, insbesondere Querschnitte, zwei verschiedener Ausführungsbeispiele eines Einhängeprofils P zur Befestigung des Bezugselements BZ in der Abheftungsprägung 3.2.

Das in **Figur 9A** gezeigte Einhängeprofil P weist einen J-förmigen Querschnitt auf. Das in **Figur 9B** gezeigte Einhängeprofil P weist einen Querschnitt mit einem hakenförmigen Ende auf, wobei das gegenüberliegende Ende eine auf dem Kopf stehende T-Form aufweist. Denkbar sind jedoch auch andere Querschnitte, die eine Befestigung des Bezugselements BZ ermöglichen.

Das abgewinkelte Ende vom J-förmigen Querschnitt oder der abstehende Haken des hakenförmigen Ende des jeweiligen Einhängeprofils P dienen der Befestigung des Einhängeprofils P in der Abheftungsprägung 3.2, insbesondere durch Einhaken, durch Einrasten oder durch Einstecken.

### Bezugszeichenliste

- 1: Tragkonstruktion
- 1.1: Stützfläche
- 2: Rahmen
- 2.1: vertikale Rahmenelemente
- 2.2: Querträger
- 3: Befestigungsblech
- 3.1: Verbindungsprägung
- 3.2: Abheftungsprägung
- 3.3: Blechrand
- 4: Spannelement
- 5: Schweißwerkzeug
- 5.1: Schweißpin
- 6: Polster
- 7: Kaschierung

- B: Überlappungsbereich
- B1, B2: Bauteil
- BZ: Bezugselement
- K: Kopfstütze
- P: Einhängeprofil
- RL: Sitz- oder Rückenlehne
- S: Sitz
- ST: Sitzteil
- SV: Steckverbindung
- X, Y, Z: Raumrichtung

## Patentansprüche

1. Tragkonstruktion (1) für eine Sitz- oder Rückenlehne (RL) eines Sitzes (S), umfassend
- einen Rahmen (2) mit zumindest zwei vertikalen Rahmenelementen (2.1) und mindestens einem Querträger (2.2) und
- ein Befestigungsblech (3), welches
mindestens eine Verbindungsprägung (3.1) zur festen Verbindung des Rahmens (2) mit dem Befestigungsblech (3) und zumindest eine Abheftungsprägung (3.2) zur Befestigung eines Bezugselements (BZ) am Befestigungsblech (3) aufweist,
- wobei die mindestens eine Verbindungsprägung (3.1) und die zumindest eine Abheftungsprägung (3.2) bereichsweise überlappen.

2. Tragkonstruktion (1) nach Anspruch 1, wobei die zumindest eine Abheftungsprägung (3.2) als eine längs verlaufende Vertiefung in das Befestigungsblech (3) eingebracht ist.

3. Tragkonstruktion (1) nach Anspruch 1 oder 2, wobei die mindestens eine Verbindungsprägung (3.1) als eine punktuelle oder stufenförmige Vertiefung in das Befestigungsblech (3) eingebracht ist.

4. Tragkonstruktion (1) nach einem der vorhergehenden Ansprüche,
wobei das Befestigungsblech (3) mehrere Verbindungsprägungen (3.1) aufweist und
wobei die zumindest eine Abheftungsprägung (3.2) mit einer der Verbindungsprägungen (3.1) bereichsweise überlappt.

5. Tragkonstruktion (1) nach einem der vorhergehenden Ansprüche,
wobei der Rahmen (2) zumindest zwei im Wesentlichen vertikale Rahmenelemente (2.1) und mindestens einen damit verbundenen Querträger (2.2) umfasst.

6. Tragkonstruktion (1) nach einem der vorhergehenden Ansprüche,
wobei die Rahmenelemente (2.1) und/oder der Querträger (2.2) jeweils ein Hohlprofil aufweisen.

7. Tragkonstruktion (1) nach einem der vorhergehenden Ansprüche,
wobei die Rahmenelemente (2.1) jeweils endseitig mit dem Querträger (2.2) mittels einer Steckverbindung (SV) formschlüssig oder form- und kraftschlüssig miteinander verbunden sind, insbesondere ineinander gesteckt sind.

8. Tragkonstruktion (1) nach einem der vorhergehenden Ansprüche,
wobei ein Überlappungsbereich (B) der zumindest einen Abheftungsprägung (3.2) und der mindestens einen Verbindungsprägung (3.1) im Bereich des Querträgers (2.2) ausgebildet ist.

9. Tragkonstruktion (1) nach einem der vorhergehenden Ansprüche,
wobei am Querträger (2.2) mindestens ein Bauteil (B1, B2) zur Aufnahme einer Kopfstütze (K) des Sitzes (S) angeordnet ist.

10. Tragkonstruktion (1) nach einem der vorhergehenden Ansprüche, umfassend eine verprägungsfreie Stützfläche (1.1), auf welcher das Bezugselement (BZ) angeordnet oder anordenbar ist.

11. Tragkonstruktion (1) nach einem der vorhergehenden Ansprüche,
wobei das Bezugselement (BZ) ein Teppich, ein Gewebe und/oder ein Naturmaterial ist.

12. Tragkonstruktion (1) nach einem der vorhergehenden Ansprüche,
wobei das Bezugselement (BZ) im Bereich der Abheftungsprägung (3.2) an dem Befestigungsblech (3) befestigt ist.

13. Sitz (S), umfassend eine Tragkonstruktion (1) nach einem der vorhergehenden Ansprüche.

14. Sitz (S) nach Anspruch 13, wobei die Tragkonstruktion (1) Teil eines Sitzteils (ST), einer relativ zum Sitzteil (ST) verstellbaren Sitz- oder Rückenlehne (RL) und/oder einer Kopfstütze (K) ist.

15. Verfahren zur Herstellung eines Sitzes (S) gemäß Anspruch 13, wobei
- die mindestens eine Verbindungsprägung (3.1) und die zumindest eine Abheftungsprägung (3.2) bereichsweise überlappend in das Befestigungsblech (3) eingebracht werden,
- das Befestigungsblech (3) am Rahmen (2) befestigt wird,
- zur Befestigung des Befestigungsblechs (3) am Rahmen (2) mindestens ein Spannelement (4) am Befestigungsblech (3) positioniert wird, mittels welchem der Rahmen (2) und das Befestigungsblech (3) wenigstens abschnittsweise gespannt werden,
- zumindest in einem Überlappungsbereich (B) von Verbindungsprägung (3.1) und Abheftungsprägung (3.2) ein Schweißwerkzeug (5) eingreifend angeordnet wird, mittels welchem das wenigstens abschnittsweise gespannte Befestigungsblech (3) an den Rahmen (2) angeschweißt wird und
- das Bezugselement (BZ) auf einer verprägungsfreien Stützfläche (1.1) des Befestigungsblechs (3) angeordnet und in der mindestens einen Abheftungsprägung (3.2) befestigt wird.
